(19) Europäisches Patentamt / European Patent Office / Office européen des brevets

(11) **EP 2 003 806 A1**

(12) **EUROPEAN PATENT APPLICATION**

(43) Date of publication:
**17.12.2008  Bulletin 2008/51**

(51) Int Cl.:
***H04L 1/00*** (2006.01)

(21) Application number: **07425377.4**

(22) Date of filing: **15.06.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(71) Applicant: **Nokia Siemens Networks Oy**
**02610 Espoo (FI)**

(72) Inventors:
• **Parolari, Sergio**
  **20133 Milano (IT)**

• **Provvedi, Leonardo**
  **SO53 4LT Eastleigh**
  **Hampshire (GB)**
• **Vutukuri, Eswar**
  **SO51 7LR Romsey**
  **Hampshire (GB)**

(74) Representative: **Style, Kelda Camilla Karen et al**
  **Page White & Farrer**
  **Bedford House**
  **John Street**
  **London, WC1N  2BF (GB)**

(54) **Protection of RCL/MAC control messages in reduced latency EGPRS**

(57)    The invention applies to GERAN networks, in particular to networks supporting EGPRS and making use of RTTI configurations. RTTI is being introduced as part of the Release 7 version of the GERAN specifications, and in particular is part of the features for RL-EG-PRS.

In a first example of the invention, of the 176 bits of the payload, 160 bits are reserved for the actual control message, and the remaining 16 bits for an additional CRC. The resulting block is then encoded exactly as for MCS-1. In this case two CRC sequences are added, as the 12-bit CRC would also be added as part of the encoding process.

With this method, the fact that an MCS-1 block contains a control block rather than a data block can be signalled to the receiver in two possible ways, both of which have already been proposed in GERAN: either by means of the four extra stealing flags or by means of a new codepoint in the CPS field of the RLC/MAC header.

EP 2 003 806 A1

## Description

The invention applies to GERAN networks, in particular to networks supporting EGPRS and making use of RTTI configurations. RTTI is being introduced as part of the Release 7 version of the GERAN specifications, and in particular is part of the features for RL-EGPRS.

At present, in EGPRS, control messages from the network to the mobile station and in the opposite direction are transmitted using the CS-1 coding scheme. This is not suitable for use in communications using RTTI configurations.

It has been proposed to use the MCS-1 coding scheme, which is one of the coding schemes that can be used to transmit user data in EGPRS. One disadvantage with this coding scheme is that the error protection of the payload is not sufficient when transmitting control messages, which require a higher level of protection than user data.

The invention proposes a new method to transmit control messages, making use of a newly defined coding scheme. The new scheme may be named MCS-0. One of the advantages is that the new coding scheme improves the reliability of the transmission of control messages.

In EGPRS, CS-1 coding is used when sending messages on the PACCH. This code has the following characteristics:

> header size: 24 bits (1 octet MAC header, 2 octets RLC header);
> payload: 160 bits (20 octets);
> header and payload are encoded together;
> 40-bit Fire code for error detection and correction (it can correct an erroneous block if there is only one bit error);
> rate ½ convolutional coder.

In the GERAN specifications, the possibility to transmit data with a reduced latency has recently been introduced. this feature is called RL-EGPRS. This allows, among other things, the possibility to transmit a radio block in 10 ms rather than 20 ms as is currently specified for EGPRS. This is referred to as RTTI.

For RL-EGPRS it has been proposed to use MCS-1 to send control messages on the PACCH [1]. This code has the following characteristics:

> header size: 31 bits (RLC/MAC header);
> message size: 176 bits (22 octets) + 2 bits (E bit, FBI/TI bit);
> header and payload are encoded separately;
> 12-bit CRC code for error detection of the payload;
> rate 1/3 convolutional coder, with puncturing (216 punctured bits; actual code rate for payload: 0.53).

Due to the short CRC, the error detection capabilities of MCS-1 are not as strong as CS-1, and may not be strong enough for the transmission of control blocks. Therefore, in this contribution, some methods to improve them are proposed.

Note, for example, that when the SACCH/TP channel was introduced in the specifications (so that the EPCCH channel can be sent in parallel to the SACCH/TP), an 18-bit CRC has been chosen for error detection, in place of the 40-bit Fire code. It is estimated that both codes have similar error detection capabilities, although the CRC code has no error correction capabilities.

In a first example, of the 176 bits of the payload, 160 bits are reserved for the actual control message, and the remaining 16 bits for an additional CRC. The resulting block is then encoded exactly as for MCS-1. In this case two CRC sequences are added, as the 12-bit CRC would also be added as part of the encoding process.

With this method, the fact that an MCS-1 block contains a control block rather than a data block can be signalled to the receiver in two possible ways, both of which have already been proposed in GERAN: either by means of the four extra stealing flags (see subclause 5.1.5.1.5 of 3GPP TS 45.003) or by means of a new codepoint in the CPS field of the RLC/MAC header (see subclause 10.4.8a.3 of 3GPP TS 44.060) [2]. The 4 extra stealing flags are always located next to the stealing flags on the left of the training sequence:

$$e(0,56) = q(11)$$

$$e(1,56) = q(8)$$

$$e(2,56) = q(9)$$

$$e(3,56) = q(10)$$

where q(8),q(9),...,q(11) = 0,0,0,0.

As a further enhancement, given that for control messages the E and FBI bits are not applicable, they can be dropped and the additional room resulting by dropping these bits from payload can be used to increase the size of the CRC from 16 bits to 18 bits. Alternatively, the additional room can be used to further improve the data coding performance by slightly lowering the code rate, or to reserve more stealing bits to signal the new header type for the RTTI mobiles.

A second, more efficient, method is to define a new coding scheme for control blocks, for example, called MCS-0. The coding scheme can be summarised as follows:

> header size: 31 bits (RLC/MAC header);
> message size: 160 bits (20 octets);
> header and payload are encoded separately;
> 18-bit CRC code for error detection of the payload (same as for SACCH/TP);
> rate 1/3 convolutional coder, with puncturing (180 punctured bits; actual code rate for payload: 0.495).

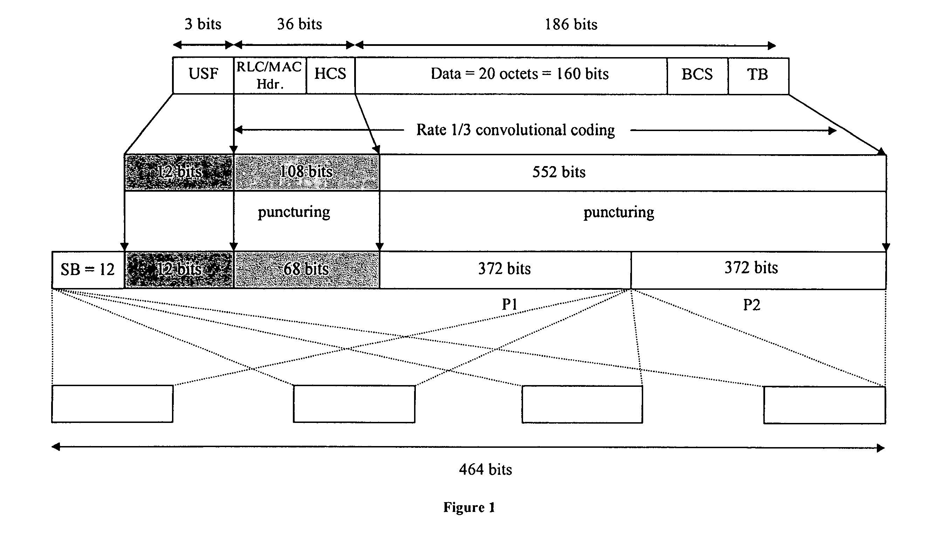

These are summarised in Figure 1. In this case it may be best to signal to the receiver the fact that an MCS-0 block has been sent (i.e. that this is a control block rather than a data block) by means of a new codepoint in the CPS field of the RLC/MAC header (see subclause 10.4.8a.3 of 3GPP TS 44.060).

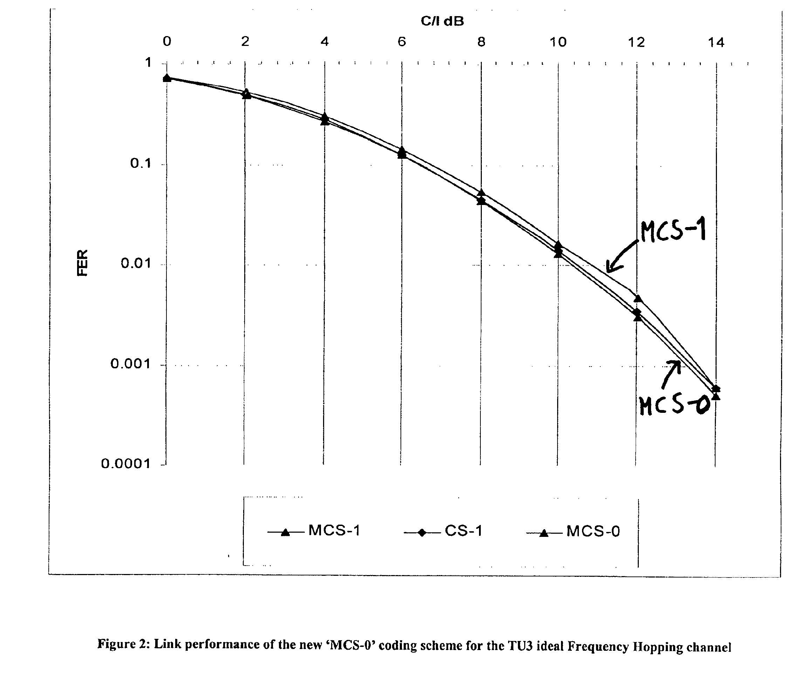

The performance of the proposed MCS-0 like coding scheme has been simulated and it can be seen from Figure 2 that the new coding scheme slightly outperforms CS-1 coding. Hence, this has sufficient robustness to transmit the control messages which are traditionally transmitted using CS-1.

As a further possibility, instead of using a rate 1/3 convolutional code, a rate ½ code can be used. With such a code, $(160+18+6)\cdot 2=368$ bits are obtained after convolutional coding, whereas 372 are needed to fill up the bursts. The missing 4 bits can be obtained by repetition. Alternatively, 4 additional stealing flags can be defined for the missing bits. The use of a different rate for the convolutional coder will not have any significant impact on the performance of the coding scheme.

Other options

Similar schemes, with a message size different from 160 bits are possible. However, the benefit of having the same payload as for CS-1 is that when distribution messages are sent using both BTTI mode (using CS-1) and RTTI mode (using the new scheme) [3], the segmentation will be the same, and there is no need to have separate segmentations for EGPRS and RL-EGPRS. Also, the coding rate increases as the payload sizes increases, thus the message is less strongly protected.

Use of other codes, such as LDPC, convolutional codes with higher constraint lengths, etc. may be possible. However, it is preferred that the coding scheme relys on the existing convolutional encoder, in order to avoid major impacts on the existing implementations.

The network (BTS) and the mobile station must use the same coding scheme when sending control messages, otherwise the receiving entity is unable to interpret the messages correctly, leading to the impossibility to set up or sustain a call. Therefore, if this coding scheme is standardised, unless a BTS or an MS uses it, it will not be able to communicate with the receiving entity. The invention is particularly applicable to GERAN BTSs and all the GERAN BTSs and mobile stations supporting RTTI would need to implement the invention.

| TS | Base Transceiver Station |
| CS-$n$ | Coding Scheme n |
| EGPRS | Enhanced GPRS |
| GERAN | GSM/EDGE Radio Access Network |
| GPRS | General Packet Radio Service |
| MCS-$n$ | Modulation and Coding Scheme $n$ |
| MS | Mobile Station |
| RL-EGPRS | Reduced Latency EGPRS |
| RTTI | Reduced Transmission Time Interval |
| GSM | Global system for mobile communication |
| EDGE | Enhanced data rates for GSM evolution |
| PACCH | Packet associated control channel |

**References**

[1] GP-070715, "Downlink Signalling in RTTI Mode", Ericsson, GERAN#34, Shenzhen (China), 14-18 May 2007

[2] GP-070984, "Working Assumptions for RTTI blocks", Ericsson, Huawei, Nokia, Nokia Siemens Networks, GERAN#34, Shenzhen (China), 14-18 May 2007

[3] GP-070987, "CR 44.060-0894 rev 2: RLC/MAC distribution message handling (Rel-7)", Ericsson, GERAN#34, Shenzhen (China), 14-18 May 2007

[4] 3GPP TS 44.060 "Radio Link Control/Medium Access Control (RLC/MAC) protocol"

[5] 3GPP TS 45.003 "Channel coding"

[6] GP-070655, "CR 45.003-0068 Introduction of Reduced TTI (Rel-7), Huawei, GERAN#34, Shenzhen (China), 14-18 May 2007

**Claims**

1. A method to transmit control messages, making use of a newly defined coding scheme.

EP 2 003 806 A1

| 3 bits | 36 bits | | 186 bits | | |
|---|---|---|---|---|---|
| USF | RLC/MAC Hdr. | HCS | Data = 20 octets = 160 bits | BCS | TB |

Rate 1/3 convolutional coding

| 12 bits | 108 bits | 552 bits |
|---|---|---|

| | puncturing | puncturing |
|---|---|---|

| SB = 12 | 12 bits | 68 bits | 372 bits | 372 bits |
|---|---|---|---|---|

P1                                    P2

464 bits

**Figure 1**

Figure 2: Link performance of the new 'MCS-0' coding scheme for the TU3 ideal Frequency Hopping channel

**European Patent**
**Office**

**PARTIAL EUROPEAN SEARCH REPORT**

which under Rule 45 of the European Patent Convention
shall be considered, for the purposes of subsequent
proceedings, as the European search report

Application Number

EP 07 42 5377

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2004/068867 A (NOKIA CORP [FI]; NOKIA INC [US]; SEBIRE BENOIST P [FI]) 12 August 2004 (2004-08-12) * page 1, line 18 * * page 8, line 13 - page 9, line 13 * * page 16, line 5 - line 17 * * figures 3,6 * ----- | | INV. H04L1/00 |
| A | WO 00/25469 A (ERICSSON TELEFON AB L M [SE]) 4 May 2000 (2000-05-04) * page 10, line 7 - line 26 * * page 14, line 1 - line 27 * * figures 4,6,7A,7B * ----- -/-- | | |

|  |
|---|
| TECHNICAL FIELDS SEARCHED (IPC) |
| H04L |

### INCOMPLETE SEARCH

The Search Division considers that the present application, or one or more of its claims, does/do not comply with the EPC to such an extent that a meaningful search into the state of the art cannot be carried out, or can only be carried out partially, for these claims.

Claims searched completely :

Claims searched incompletely :

Claims not searched :

Reason for the limitation of the search:

see sheet C

| Place of search | Date of completion of the search | Examiner |
|---|---|---|
| Munich | 22 October 2007 | Marzenke, Marco |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
...............................................................................
& : member of the same patent family, corresponding
document

EPO FORM 1503 03.82 (P04C07)

**European Patent Office**

**PARTIAL EUROPEAN SEARCH REPORT**

Application Number

EP 07 42 5377

| DOCUMENTS CONSIDERED TO BE RELEVANT | | | CLASSIFICATION OF THE APPLICATION (IPC) |
|---|---|---|---|
| Category | Citation of document with indication, where appropriate, of relevant passages | Relevant to claim | |
| A | MOLKDAR, LAMBOTHARAN: "Impact of header error on EGPRS link level performance in IR mode" INTERNATIONAL CONFERENCE ON 3G MOBILE COMMUNICATION TECHNOLOGIES, [Online] no. 477, 2001, pages 114-118, XP002455865 London, UK Retrieved from the Internet: URL:http://ieeexplore.ieee.org/iel5/7359/19962/00923520.pdf> [retrieved on 2007-10-19] * page 114, right-hand column, paragraph 2.1 - page 115, left-hand column, paragraph 2.3 * * figure 1; table 1 * ----- | | |
| A | BALACHANDRAN K ET AL: "A PROPOSAL FOR EGPRS RADIO LINK CONTROL USING LINK ADAPTATION AND INCREMENTAL REDUNDANCY" BELL LABS TECHNICAL JOURNAL, WILEY, CA, US, vol. 4, no. 3, July 1999 (1999-07), pages 19-36, XP000878195 ISSN: 1089-7089 * page 21, left-hand column - page 35, left-hand column * * figures 1,3,9,10; tables II,III,V,VI * ----- | | TECHNICAL FIELDS SEARCHED (IPC) |

EPO FORM 1503 03.82 (P04C10)

**European Patent
Office**

**INCOMPLETE SEARCH
SHEET C**

Application Number

EP 07 42 5377

Claim(s) searched incompletely:
       1

Reason for the limitation of the search:

The method to transmit control messages as presently set forth in the
only claim of present application is solely defined by 'making use of a
newly defined coding scheme'.

This generic formulation is entirely unclear as to any of the effective
technical method steps performed during said 'newly defined coding
scheme'. The claim fails to define any technical features whatsoever
rendering the scope of the claim obscure (Article 84 EPC).

Indeed, the claim covers any class of coding (e.g. source or channel
coding) and within the different possible classes, any particular type of
coding (e.g. MPEG, JPEG, Huffman coding etc. having regard to source
coding and block codes, convolutional codes, serially or parallely
concatenated codes, punctured codes etc. with respect to channel coding).
It is further left to the reader's imagination which data are effectively
subjected to the coding (the control messages ?) and in which system
environment the transmission of (possibly encoded) control messages takes
place.

In contrast to the generic formulation of the claim, the description
merely offers a very limited disclosure as to what the desired coding
scheme effectively looks like. Essentially, two very specific embodiments
of the claimed coding scheme are presented, differing in a rate r of a
convolutional code applied after appending an 18-bit CRC to 160 bits of
control message payload (see page 3, lines 3-10 and figure 1: $r=1/3$ and
lines 19-24: $r=1/2$ respectively).

Similarly, the description (see in particular page 1) clearly stipulates
that the coding scheme is to be applied for control messages sent on the
packet associated channel PACCH of the reduced latency EGPRS system
without giving cause to assume that the coding is used on any other
channel in the context of any other transmission system.

Therefore, the present broad wording of the claim is not justified by the
extent of the description and drawings (see the Guidelines C-III-6.1).
The claim is thus not supported by the description, contrary to Article
84 EPC.

In other words, the disclosure of the above mentioned two narrow
embodiments are considered to be insufficient to enable the skilled
person to carry out the invention over the whole of the broad field
claimed, contrary to Article 83 EPC (see also the Guidelines, C-III-6.4
and C-II-4.9).

For the above reasons, the claim does not comply with the provisions of
the European Patent Convention to such an extent that it is not possible
to carry out a meaningful search into the state of the art over the whole
of said claim, Rule 45 EPC (see also the Guidelines, B-X-8(iii)(b)).

**European Patent Office**

**INCOMPLETE SEARCH
SHEET C**

Application Number

EP 07 42 5377

In view of the Guidelines (see B-VII-3, see in particular example (i)), the search has therefore  been limited to the above mentioned narrow disclosure in the description.

EP 2 003 806 A1

**ANNEX TO THE EUROPEAN SEARCH REPORT**
**ON EUROPEAN PATENT APPLICATION NO.**

EP 07 42 5377

This annex lists the patent family members relating to the patent documents cited in the above-mentioned European search report.
The members are as contained in the European Patent Office EDP file on
The European Patent Office is in no way liable for these particulars which are merely given for the purpose of information.

22-10-2007

| Patent document cited in search report | | Publication date | Patent family member(s) | | Publication date |
|---|---|---|---|---|---|
| WO 2004068867 | A | 12-08-2004 | EP | 1588509 A2 | 26-10-2005 |
| | | | US | 2004152468 A1 | 05-08-2004 |
| WO 0025469 | A | 04-05-2000 | AU | 771841 B2 | 01-04-2004 |
| | | | AU | 2130800 A | 15-05-2000 |
| | | | CA | 2347946 A1 | 04-05-2000 |
| | | | CN | 1332917 A | 23-01-2002 |
| | | | EP | 1123602 A1 | 16-08-2001 |
| | | | JP | 2002529009 T | 03-09-2002 |
| | | | TW | 447200 B | 21-07-2001 |

EPO FORM P0459

For more details about this annex : see Official Journal of the European Patent Office, No. 12/82